## Europäisches Patentamt
## European Patent Office
## Office européen des brevets

(11) Publication number: **0 023 475**
**A1**

(12) # EUROPEAN PATENT APPLICATION

(21) Application number: **80830052.9**

(22) Date of filing: **18.07.80**

(51) Int. Cl.³: **B 27 B 33/08**

(30) Priority: **31.07.79 IT 347479**

(43) Date of publication of application:
**04.02.81 Bulletin 81/5**

(84) Designated Contracting States:
**AT DE FR GB SE**

(71) Applicant: **C.S.R. Consorzio Studi e Ricerche**
**Corso d'Augusto, n. 144**
**I-47037 Rimini (Forli)(IT)**

(72) Inventor: **Gemmani, Giuseppe**
**Via Marecchiese, 20**
**I-47037 Rimini (Forli)(IT)**

(74) Representative: **Pederzini, Paolo**
**BUGNION S.p.A. Via Farini n. 37**
**I-40124 Bologna(IT)**

(54) Circular blade of a low noise level.

(57) The invention relates to a circular blade of a low noise level, in particular for machining materials made of wood or of the derivatives thereof at high rotation speeds, in which the spaces (2) and (32) between two successive teeth (9) and (31) for the elimination of shavings are interrupted or almost totally sealed along a direction perpendicular to the plane of the said blade.

FIG 6

EP 0 023 475 A1

- 1 -

## Circular blade of a low noise level

The invention relates to a circular blade of a low noise
level for machining panels and/or planks made of wood, of
the type that has teeth with hard metal facings, the transverse width of which is greater than the gauge of the blade.
The said blades, generally called circular saws, rotate,
for the said operation, at somewhat high speeds of up to
80 metres per second (measuring the working speed peripherally), which constitutes the optimum value and thus the
blades are made to rotate at speeds, expressed in revolutions per minute, that can be varied to suit the dimensions
thereof.

Generally speaking the speed, for blades of up to 30 centimetres in diameter, is around 5,000 revolutions per minute.

At the aforementioned speed values, the said blades, constituted by a disc made of hardened steel, are terribly
noisy both when idling and, particularly, during the phase
when the panel is being machined and processed.

From studies that have been carried out, it is possible to
attribute the effects of noise to three main causes :

a) a cause of a vibrational nature, since a homogeneous
   circular disc (even when devoid of peripheral teeth)
   emits, under given speed conditions, and particularly
   at high speeds, noise derived from its own vibrations;
b) a cause of an aerodynamic nature, since the teeth on the blade come into collision, protruding from the edge of the disc, with the air and, together with the spaces for the elimination of shavings, create turbulent air in the inside of the said spaces which, at the said rotation speeds, generates sound waves of considerable value;

c) a cause of a mechanical nature, due to the impact of the teeth against the panel to be cut.

In order to cut down the idling noise of circular blades, steps have really only been taken to remedy the first cause (and in this connection it should be borne in mind that, as a rule, out of eight working hours per day in which the saw is kept constantly revolving, for more than half the time it is idling, and under these conditions the noise levels in the immediate vicinity of the said blades exceed 100 dB (A)).

One solution for this consisted in avoiding the use of a one piece disc which is responsible for the phenomenon of alternating frequency vibration, and for this reason the disc was provided bilaterally with blades interposed with an appropriate element, which thus created a composite material blade with sufficient gain from the point of view of noise because of vibratory phenomena not being generated.

A similar solution consisted in utilizing blades created with concentric discs (that is to say, constituted by a central disc and by successive circular rings of an ever increasing diameter) made out of metal and a damping material, such as rubber or similar, respectively.

Another solution still, again in respect of the first of the causes examined, consisted in compelling the disc constituting the blade, in an area not concerned with the cutting, to be bilaterally between two sources of compressed air (the disc thus being held tight in an area in between two cushions of air) which thus prevented the generation of vibratory phenomena.

As can be seen from the foregoing, using methods that at times differed very noticeably, though equal in efficiency, all manufacturers have concentrated on point one of the causes of noise.

As regards point b), that is to say, the cause of an aerodynamic nature, studies have been made of a theoretical and practical nature concerning the shape of the tooth and of the space, the conclusions reached being that aerodynamic caused noise was directly proportional to the ratio between the length of the space (measured peripherally) and the gauge of the blade, and thus that in order to reduce noise, action could be taken to decrease the length of the space (this being possible up to certain lower values below which it is not feasible to go on account of shaving elimination reasons) or to increase the gauge of the blade (and therefore also of the tooth), which is a solution certainly not acceptable from a practical viewpoint since it would lead to a rise in the costs of the tool and, above all, to the removal and loss (in the utilization phase) of considerable quantities of material.

The essential object of the invention is, therefore, to overcome the aforementioned difficulties through the creation of a circular blade that is able to rotate at high speed, though at relatively low noise values (definitely below those to be found with the present cutter blades), contemporaneously acts remedially on vibrational and aerodynamic causes, yet maintains the cutting efficiency, the characteristics and, above all, the gauge of the blade, at the same values as those currently reached.

This and other objects too have all been attained with the blade forming the subject of the invention, of the type comprising, placed peripherally, a plurality of alternating teeth and spaces, essential features of which are that it comprises at least one element positioned at least in the region of the spaces in the blade so as to partially or completely seal them in a direction perpendicular to the plane of the said blade.

In one solution, essential features of the blade in question are that it comprises two blades, placed bilaterally on the outside of the sides of the body of the blade, so as to seal the space, of a gauge no greater than the part of the teeth that projects from the plane of the said body.

According to another solution, essential features of the blade in question are that it comprises two identical circular discs provided externally with a plurality of spaces and teeth that are properly spaced and alternate, the said element for sealing the spaces being constituted, for a space belonging to one disc, by the foot of the tooth of the disc at the side thereof, since the two discs rotate, one with respect to the other, at an angle equal to half a pitch between two successive teeth.

With the said methods it is, therefore, possible to reduce the noise of the blade under rotation by virtue of the damping of vibrational phenomena, thanks to the use of composite material and, above all, by sealing the spaces in a direction crosswise to the plane of the disc, thereby preventing the generation of turbulent fluid flows originated by the tips constituting the facing of the teeth that are moving.

Further characteristics and advantages of the invention will emerge more obviously from the detailed description that follows of one preferred but not sole form of embodiment, illustrated purely as an unlimited example on the accompanying drawings, in which :

- Fig. 1 shows one example, in a plan view, of a conventional circular blade;
- Fig. 2 shows a view from A in Fig. 1;
- Fig. 3 shows a first form of embodiment for the blade in question, in a plan view in Fig. 3a, and in a profile in Fig. 3b;
- Fig. 4 shows, in a perspective view, the blade illustrated in Fig. 3;
- Fig. 5 shows, again in a perspective view, a further form of embodiment for the blade in question;
- Fig. 6 shows, in a plan view, a further form of embodiment for the blade in question;
- Fig. 7 shows, in a perspective view, a further form of embodiment for the blade in question that has staggered teeth and an interposed blade.

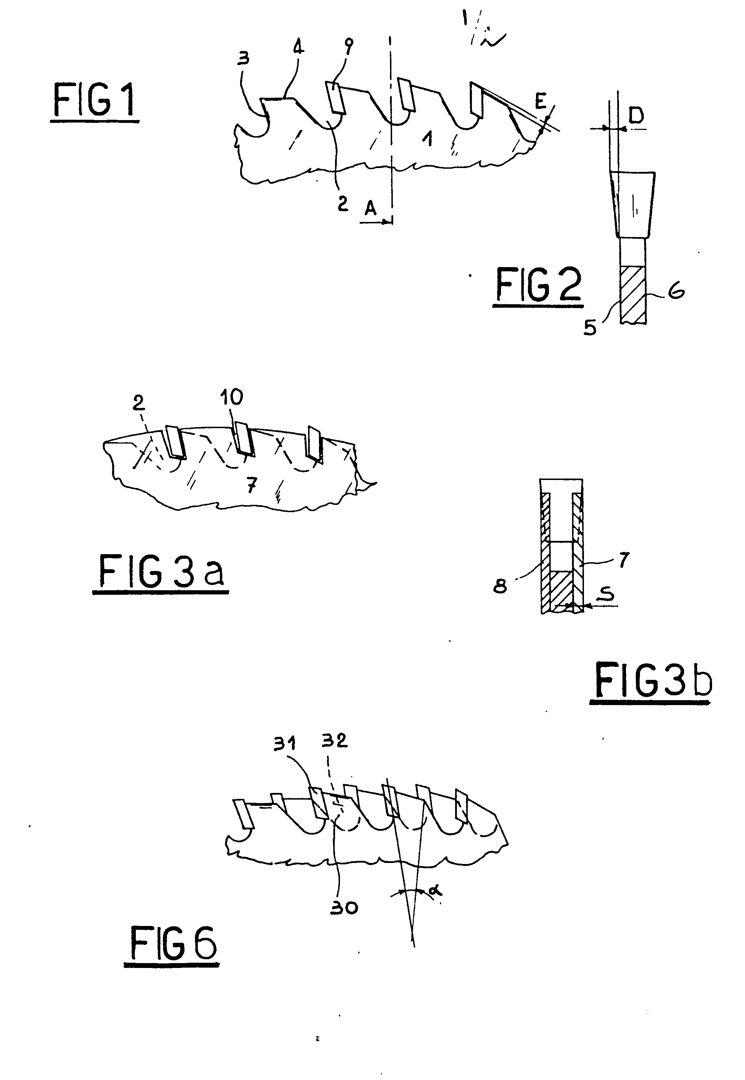

With reference to Fig. 1, the conventional circular blades for cutting are constituted by a disc body 1, the periphery of which is provided with a plurality of uniformly intervalled spaces 2 defined by a substantially radial part 3 and by an inclined part 4. The radial part is faced with hard metal tips 9 (usually Widia) whose extremities are sharpened, and these project externally from the sides 5 and 6 of the disc 1 (by a quantity D) and at the top from the maximum circumference thereof (by a quantity E).

The said tips are the elements that act directly during the cutting operation.

In Fig. 3, shown at 7 and 8, there are two blades of gauge S lesser than dimension D and of a diameter identical to the pitch diameter of the body 1, which are fixed (by means of bonding agents, welding or some other suitable material) to both sides 5 and 6 of the disc 1. The said blades, which are provided with a plurality of uniformly spaced flutes 10 in order to allow the tip 9 to fit therein, thus achieve the bilateral sealing of the space 2 (in a direction perpendicular to the plane of the disc 1) leaving an aperture 11 free for the elimination of shavings during the machining operations. The latter are not in the slightest altered because of the presence of the blades 7 and 8 since these remain in the inside of the lateral surface of the said tips whilst, on the other side, the discharge of the shavings takes place properly via the aperture 11.

Therefore, on the same operating and mechanical basis, the circular blade in question is a lot less noisy, first of all because it acts remedially on the first of the aforementioned causes, that is to say, the presence of the blades 7 and 8 renders the saw a composite material element that damps vibrational phenomena , and essentially because it takes action against the aerodynamic cause and prevents, through the sealing of the spaces in a direction perpendicular to the plane of the disc, the generation of turbulent fluid flows originated by the tips constituting the facing of the teeth that are moving.

Measurements taken experimentally have shown that with the solution in question there is a decrease in noise of around 15 - 20 dB (A) with respect to the conventional saw, under the same measurement conditions.

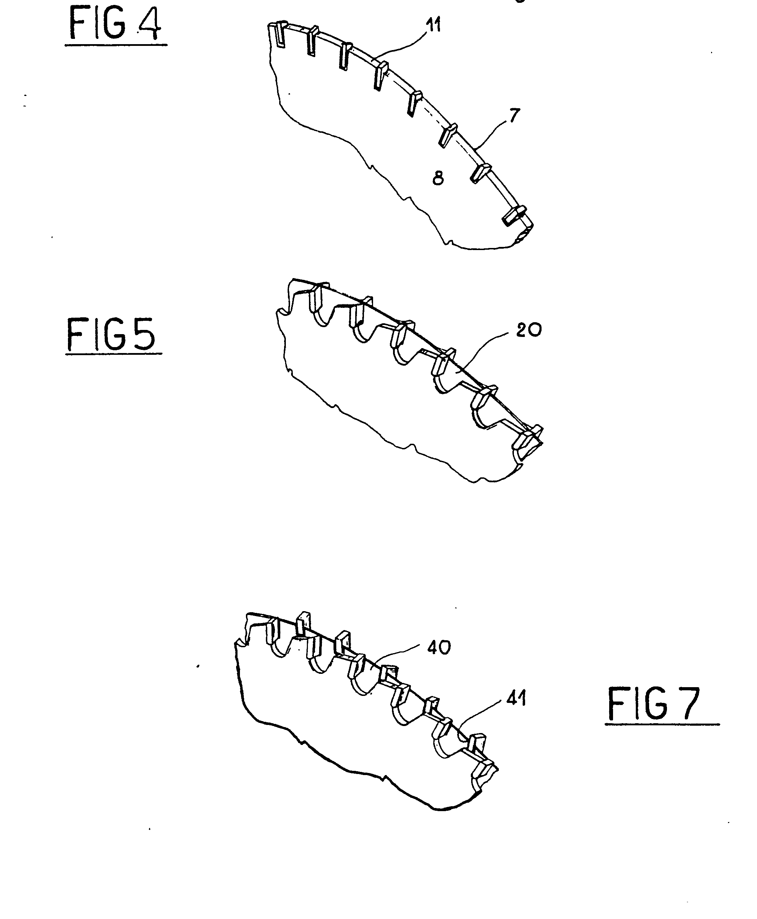

As can be seen from Figs. 3 and 4, the two blades 7 and 8 have flutes 10 greater than the lateral dimensions of the tip in order to allow the grinding wheel to be inserted to sharpen it, this operation being performed with machines exactly the same as those used to date.

Fig. 5 shows an alternative to the foregoing solution, in which, instead of two bilateral blades, use is made of one single central blade 20 which, in the case under consideration is constituted by a circular disc whose diameter also coincides with the pitch diameter of the disc. Here again a reduction is brought about in the noise both through the vibratory effect (the blade) and through the aerodynamic effect (the sealing of the spaces), though to a slightly lesser extent compared to the solution seen previously.

Likewise, in Fig. 6 a third solution is illustrated, virtually imagined as if a conventional circular saw were divided along a vertical plane of symmetry parallel to the plane of the blade itself, with the two parts thus created then to be rotated at an angle $\alpha$ equal to half a pitch of a tooth in such a way that the foot 30 of a tooth 31 constitutes the element for sealing the space 32 contained in the other part and vice versa. As can be seen, in this case the blade according to the previous solutions is missing although the resulting circular blade is constituted by a composite body.

In Fig. 7 the solution outlined in Fig. 6 is shown but this time, in between the two discs which are also rotated at an angle of $\alpha$ , one with respect to the other, there is instead the interposition of a blade 40. Unlike the preceding one, this solution allows the use of even commercial makes of blades (also when of a lesser gauge), without attention having to be paid to the ratio and the dimensions of the spaces, as is the case for the solution in Fig. 6, in order to seal completely the space in the adjacent disc.

Furthermore, the flutes 41 in the blade 40 are so dimensioned as to fully enshroud the cutter tip without any necessity for a gap for grinding since this is done, for the type of blade in question (as per Figs. 5, 6 and 7) with the blade dismantled; this makes possible a further gain in combatting noise because of the spaces being more greatly sealed.

With the two latter solutions it is also possible to obtain a further small decrease in noise also as regards the third  cause mentioned, since with the presence of alternate teeth the processing of the panel becomes more gradual and less violent than with the teeth in Fig. 4.

Thus in all forms of embodiment described herein, a decrease has been achieved in the noise level when the blade is idling, without adversely affecting the machining quality or efficiency, through the partial or total sealing, laterally, bilaterally or centrally, of the space existing between one tooth and the next, and through the utilization of a blade that is not made in one single piece, thereby acting remedially both on the vibrational effect and on the aerodynamic effect.

To conclude, the solution shown in Fig. 5 can be achieved differently by welding directly, centrally, to the inside of the spaces a number of sealing elements which virtually create a similar solution from the aerodynamic viewpoint, although not a composite body.

Then again, the conformation of the blades can be that of proper circular disks or of circular rings only in the region of the spaces to be covered.

The invention can adopt, in its practical forms of embodiment, conformations that differ from what has been described above and, in particular, numerous modifications of a practical nature may be made thereto without this in any way constituting a deviation from the framework of protection afforded to the invention.

- 1 -

Claims

1.  Circular blade of a low noise level, of the type comprising, placed peripherally, a plurality of alternating teeth 9 and spaces 2, essential features of which are that it comprises at least one element positioned at least in the region of the spaces 2 in the blade, so as to partially or completely seal them in a direction perpendicular to the plane of the blade.

2.  Blade according to the preceding claim, wherein the said element is constituted by at least one blade 7, placed externally on the side of the body of the blade, so as to seal the space 2, of a gauge S no greater than the part D of a tooth that projects from the plane of the said body.

3.  Blade according to Claims 1 and 2, wherein there are two blades 7 and 8, placed bilaterally on the outside of the sides of the body of the blade 1, so as to seal the space 2.

4.  Blade according to the preceding claims, wherein the said blades are of an external overall volume less than the maximum outside diameter defined by the teeth of the blade.

5.  Blade according to Claim 1, comprising two identical circular discs provided externally with a plurality of properly intervalled and alternating spaces and teeth, an essential feature of which is that the said element is con-

stituted by a blade 20 placed in between two discs, so as to seal the said spaces.

6. Blade according to Claim 1, comprising two identical circular discs provided externally with a plurality of properly intervalled and alternating spaces and teeth, an essential feature of which is that the said element for sealing the spaces is constituted, for a space 32 belonging to one disc, by the foot 30 of the tooth of the adjacent disc, the two discs being rotated, one with respect to the other, at an angle $\alpha$ equal to half a pitch between two successive teeth.

7. Blade according to Claims 1, 5 and 6, comprising two identical circular discs provided externally with a plurality of properly intervalled and alternating spaces and teeth, an essential feature of which is that the said sealing element is constituted by a blade 40 placed in between the two discs, and that the latter are rotated, one with respect to the other, at an angle $\alpha$ equal to half a pitch between two successive teeth.

8. Blade according to the preceding claims, wherein the said blades are constituted by circular rings coaxial and integral with the body of the blade.

9. Blade according to Claims 1 - 7, wherein the said blades are constituted by circular discs coaxial and integral with the body of the blade.

10. Blade according to the preceding claims, of the type comprising one or more discs provided with spaces, radially to each of which is fixed a facing tip constituting the element directly concerned with cutting, an essential feature of which is that the said blades are of an outside diameter equal to the maximum pitch diameter of the disc.

FIG 1

FIG 2

FIG 3a

FIG 3b

FIG 6

FIG 4

11

7

8

FIG 5

20

40

41

FIG 7

0023475

European Patent
Office

**EUROPEAN SEARCH REPORT**

Application number

EP 80 83 0052

| DOCUMENTS CONSIDERED TO BE RELEVANT | | | CLASSIFICATION OF THE APPLICATION (Int Cl ³) |
|---|---|---|---|
| Category | Citation of document with indication, where appropriate, of relevant passages | Relevant to claim | B 27 B 33/08 |
| X | US - A - 4 135 421 (BERTRAM)<br>* Abstract *<br><br>-- | 1 | |
| A | DE - A - 2 438 043 (BRAUN) | | |
| A | DE - C - 651 200 (ASCHENBRENNER) | | |
| A | CH - A - 356 588 (HINTERMEISTER) | | |
| A | FR - A - 1 226 328 (JABOULAY) | | **TECHNICAL FIELDS SEARCHED (Int Cl.³)** |
| A | US - A - 3 976 112 (ROWLSON) | | |
| A | US - A - 3 181 577 (GASKINS) | | B 27 B 33/00 |
| A | US - A - 1 689 618 (BROWN) | | B 27 G 13/00<br>B 23 D 61/00 |
| A | US - A - 1 566 880 (KELLY)<br><br>---- | | |

CATEGORY OF
CITED DOCUMENTS

X: particularly relevant
A: technological background
O: non-written disclosure
P: intermediate document
T: theory or principle underlying
the invention
E: conflicting application
D: document cited in the
application
L: citation for other reasons

&: member of the same patent
family,
corresponding document .

The present search report has been drawn up for all claims

| Place of search | Date of completion of the search | Examiner |
|---|---|---|
| The Hague | 30-10-1980 | DE GUSSEM |

EPO Form 1503.1  06.78